# EUROPÄISCHE PATENTSCHRIFT

(11) **EP 2 241 896 B1**
(45) Veröffentlichungstag und Bekanntmachung des Hinweises auf die Patenterteilung: **14.03.2012**
(21) Anmeldenummer: 08008601.0
(22) Anmeldetag: 23.09.2003
(51) Int. Cl.: G01P 3/68, G01P 3/80, G01P 3/36, G05D 1/08, A63H 30/04, A63H 27/00

(54) **Stabilisierungssystem für Flugkörper**
Stabilising system for missiles
Système de stabilisation pour corps volants

(30) Priorität: 23.09.2002 DE 10244313; 30.11.2002 DE 10256202; 14.12.2002 DE 10258545
(43) Veröffentlichungstag der Anmeldung: 20.10.2010
(62) Teilanmeldung aus: 03797486.2
(73) Patentinhaber: Reich, Stefan, 82418 Murnau (DE); Captron Electronic GmbH, 82140 Olching (DE)
(72) Erfinder: Reich, Stefan, 82418 Mumau (DE)

(56) Entgegenhaltungen:
- EP-A1- 0 153 840
- GB-A- 2 041 689
- US-A- 3 944 729
- US-A- 4 671 650
- US-A- 6 118 132

## Beschreibung

Die Erfindung betrifft eine Vorrichtung und Verfahren zur Messung von Bewegungsgrößen wie Geschwindigkeit und/oder Position eines maschinell steuerbaren Vehikels, oder: wobei der Begriff "Vehikel" auch Flugkörper beinhaltet, in mindestens einem seiner sechs Freiheitsgrade, unter Verwendung optischer Sensorik; ferner insbesondere eine Verwendung als Stabilisierungssystem zur Steuerung unbemannter oder bemannter Flugkörper. Zweck einer solchen Stabilisierung ist es, die Steuerung wesentlich zu vereinfachen oder auch vollständig zu übernehmen.

Besonders für ferngelenkte Hubschrauber ist eine solche Stabilisierung wichtig, da deren Steuerung schwierig und nur geübten Piloten möglich ist. Beim Hubschrauber kann die Stabilisierung insbesondere eine oder beide horizontale Komponenten der Flugbewegung beinhalten. Ein weiteres mögliches Anwendungsgebiet der Erfindung ist die Vereinfachung der Steuerung bemannter Flugzeuge insbesondere in Bodennähe und beim Landevorgang. In weiteren Ausgestaltungen ergeben sich weitere Anwendungen, wie Abstandsmessung, Zielverfolgung, Abtastung eines Höhenreliefs des Bodens, Abstimmung der Flugbewegung mehrerer Flugkörper aufeinander.

Übliche ferngelenkte Hubschrauber, wie sie als Hobby und zur Flugfotografie verwendet werden, enthalten zu Stabilisierung lediglich einen piezoelektrischen Drehgeber, zur Stabilisierung um die Hochachse über den Heckrotor, nicht jedoch die anderen Achsen.

Sowohl DE 69502379 als auch Japan-10328427 beschreiben eine Regelung für Hubschrauber, wobei Instrumente für Gravitationsbeschleunigung und Drehgeschwindigkeit vorhanden sind, womit ein künstlicher Horizont dargestellt und die Schräg neigung der Rotorblätter geregelt wird.

Bei US 5,738,300 wird zusätzlich die Reisegeschwindigkeit gegenüber Luft (Air Speed) gemessen und geregelt Eine Regelung über Grund, und besonders ein stationärer Schwebeflug, sind in allen genannten Fällen nicht möglich.

RU 9300250 (Russland) und DE 69507168 beschreiben Stabilisienrngssysteme, bei denen durch mehrere Lichtsensoren die Richtung des Lichteinfalls gemessenen und ausgewertet wird, um eine Information über die Schräglage zu erhalten und diese zu regeln, wobei auch Annäherung an Objekte erkannt werden können. Beide genannten Systeme können nur bei gleichmäßige Beleuchtung und einem sehr flachen Horizont korrekt funktionieren.

EP 0 780 807 beschreibt einen Autopiloten, der herkömmlichen Instrumente wie Kreisel verwendet und Fluglage sowie horizontale Geschwindigkeiten auf relative Weise stabilisiert. Eine absolute Messung oder Regelung der absoluten Boden-bezogenen Position ist jedoch nicht möglich.

Um etwa die Flugbahn eines Helikopters zu regeln, etwa um auf der Stelle zu schweben, muss durch geeignete Ansteuerung der Rotorblätter erstens die Neigung (Roll- und Nick-Wnkel) und zweitens die dadurch resultierende Geschwindigkeit geregelt werden. Hierzu müssen sowohl Neigung als auch Horizontat-Geschwindigkeit bekannt sein, und zwar vorzugsweise über Grund. Zum Alleinflug genügt es nicht, wenn einer Schräglage stets entgegengewirkt wird, denn selbst dann kann der Hubschrauber eine vorhandene Geschwindigkeit nicht selbständig abbauen, sondern muss durch eine dosierte Gegen-Neigung zum Stillstand gebracht werden. In diesem Zusammenhang besteht die Aufgabe der Erfindung darin, horizontale Bewegungen über Grund zu messen, um sie stabilisieren zu können.

DE 69426738 T2 beschreibt ein Navigationssystem mit einem an einem kardanisch aufgehängten Tisch befestigten Bildsensor, dessen Bilddaten auf Verschiebung ausgewertet werden und zur Positionsbestimmung aufintegriert werden.

DE 69310695 T2 beschreibt eine Auswertung eines von der Flugposition erhaltenen Bildes von einer oder mehreren Kameras. Dabei werden einzelne charakteristische Bildstellen fortlaufend auf optische Wanderung untersucht, daraus ein Zentrum dieser Bewegungen (Fluchtpunkt) erkannt, und die einzelnen Verschiebungsgeschwindigkeiten ausgewertet, gewichtet in Bezug zu ihrem Fluchtpunkt-Abstand, woraus Abstände zu den betreffenden Bodenpunkten berechnet werden, zwecks Navigation.

DE 690 12278 T2 vergleicht aktuell aufgenommene Bilder mit einer Karte aus früher abgespeicherten Bildern zwecks Wiedererkennung, ebenfalls zur Navigation.

Alle drei letztgenannten Verfahren erfordern eine aufwendige Bildverarbeitung und mindestens eine Kamera. Die Mess-Geschwindigkeit ist durch die von der Kamera vorgegebene Bildfolgefrequenz begrenzt. Bei einer Videokamera ist dies für eine rasche Lageregelung nachteilhaft, besonders bei kleinen Hubschraubern. Für leichte ferngesteuerte. Flugkörper sind solche Verfahren aus Gründen des Gewichts, der Kosten und der begrenzten Abtast-Rate nachteilig.

Positions-Messung mit Satellitennavigation (GPS) hat den Nachteil, dass kleine Bewegungen, wie sie in Bodennähe wichtig sind, nicht genau genug erfasst werden. Außerdem ist der Einsatz in Spielzeug-Modellen sowohl aus Gewichts- als auch aus Kosten-Gründen nicht sinnvoll.

Aus der US 4 671 650 A ist ein Verfahren zur Bestimmung der Position und der Geschwindigkeit eines Flugzeugs bekannt, bei dem Meßsignale aus zwei optoelektronischen Sensoren abgeleitet werden, die im Flugzeug angeordnet sind und den überflogenen Untergrund abtasten. Dabei wird ein Roll- und ein Pitch-Signal der Neigung herangezogen, um die Messung rechnerisch von Einflüssen zu korrigieren, die durch Neigungen des Flugzeugs auftreten.

Aufgabe der Erfindung ist es, ein Verfahren und ein System zur Stabilisierung eines mit Eigenantrieb versehenen Flugkörpers während dem Flugbetrieb anzugeben.

Zur Lösung der Aufgabe sind die Merkmale der unabhängigen Ansprüche vorgesehen.

Als Abbildungsoptik kann beispielsweise eine Sammellinse, ein Kameraobjektiv, ein Hohlspiegel oder jede Bild-projizierende Linsengruppe verwendet werden. Als Verschiebungssensor lässt sich vorzugsweise ein optischer Sensor mit einer im Vergleich zu Bildaufnahmevorrichtungen geringen Anzahl von photoempfindlichen Elementen und mit einer auf dem gleichen Chip integrierten Auswerte-Elektronik verwenden, wie sie gelegentlich auch als Bewegungssensor bekannt sind und gewöhnlicherweise in optischen Mäusen eingesetzt werden. Letztere werden nachfolgend Optomaus-Sensoren genannt.

Ein solcher Verschiebungssensor beinhaltet auf einem Substrat eine Abtastfläche, die aus einer Vielzahl lichtempfindlicher Teilflächen (Pixel) besteht, deren Signale regelmäßig ausgelesen werden, wobei die Auslese-Rate wesentlich höher sein kann als die bei Videokameras gegebene Bildwechsetfrequenz, und enthält ferner auf dem gleichen Substrat eine Auswert-Einheit, in der die Pixel-Signale elektronisch auf Verschiebung ausgewertet werden. Die Verschiebung kann üblicherweise in zwei orthogonalen Koordinaten inkremental ermittelt und in separaten Messwerten (delta x, delta y) ausgegeben werden. Die Verschiebung kann in feine Stufen aufgelöst sein, die beispielsweise dem Pixelabstand entsprechen können. Die Erkennung des Sensors kann sowohl Richtung als auch Ausmaß der optischen Verschiebung (Translation) beinhalten.

Um auch bei zufällig und unregelmäßig verteilten Bildstrukturen der Maus-Unterlage, wie sie etwa durch die mikroskopischen Fasern eines Papiers gegeben sind, eine Verschiebung zu erkennen, enthalten übliche Optomaus-Sensoren meist 16X16,18X18 oder eine ähnliche Anzahl Pixel in CCD-Technik (charge coupled device). Die Ermittlung der Verschiebungsgröße kann erfolgen, indem die Daten dieser Pixel fortlaufend wiederholt ausgelesen werden und mit denen von einem früheren Zeitpunkt aus der selben Sequenz korreliert und dabei koordinatenmäßig miteinander verglichen werden. Der Vergleich kann mit den jeweils zuletzt ausgelesen Daten erfolgen oder mit Daten aus einem früheren Zyklus der selben Sequenz. Die Daten können zeitlich zueinander korreliert werden. Der Auswertprozess kann digital programmgesteuert erfolgen. Er kann einen Ahnlichkeits-Algorithmus verwenden. Hierzu können die Helligkeitssignale der einzelnen Pixel zunächst in wenige diskrete Helligkehsstufen unterteilt werden, wodurch sich die Menge der auszuwertenden Information reduziert. Eine Anpassung an die durchschnittliche Bildhelligkeit kann beinhaltet sein, indem die Belichtungszeit variiert und / oder indem die Auswertung der Pixel in Relation mit mindestens einem, an die Durschnittshelligkeit angepassten gemeinsamen Vergleichswert erfolgt. Mit Verfahren dieser Art kann erreicht werden, dass der Auswertevorgang auch bei verschieden hellen Untergründen oder Umgebungen korrekt erfolgt.

Verschiebungs-Sensoren, auch wenn sie ursprünglich nur für den Einsatz in Optomäusen und zur Navigaton auf Computer-Bildschirmen bestimmt sind, können gemäß der vorliegenden Erfindung vorteilhaft als Sensor eingesetzt werden, indem sie mit der beschriebenen, entfernte Objekte abbildenden Optik kombiniert werden. Somit wird deren Verwendung zur Abtastung von entfernten Objekten im freien Raum möglich.

In den meisten Fallen kann die Beleuchtung der Objekte ausschließlich durch das Umgebungslicht erfolgten.

Weitere Vorteile von Sensoren, bei denen sich lichtempfindliches Array und Auswertelektronik auf dem gleichen Chip befinden sind deren niedrige Kosten und geringes Gewicht, sowie deren hohe Auswertegeschwindigkeit.

Als Vorteil einer relativ kleinen Pixelzahl ist die rasche Abtast-Rate zu nennen im Vergleich mit Systemen, die eine Fernseh- bzw. Videokamera benötigen. Die Abtastrate ist für eine ausreichend schnelle Lageregelung von Flugkörpern umso wichtiger, je kleiner und daher rascher reagierend der Flugkörper ist. Indem auf die hohe Datenmenge eines Videosignals verzichtet wird, kann man im Gegenzug von einer umso höheren Verarbeitungsgeschwindigkeit profitieren. Der Veschiebungssensor kann mit einer Taktfrequenz betrieben werden, die wesentlich niedriger ist als die laut Datenblatt vorgesehene Taktfrequenz. Hierdurch werden längere Belichtungszeden und daher eine höhere Lichtempfindlichkeit möglich. Bei Verringerung der Taktfrequenz auf 75 % bis 10% oder auch weniger erhält man immer noch eine im Vergleich zu Video-Kameras wesentlich schnellere Datenrate.

Im Gegensatz zur Verwendung eines Verschiebungssensors in einer optischen Maus, muss die erfindungsgemäße Vorrichtung zur Erfassung von wesentlich grösseren und entfernteren Objekten ausgelegt sein. Es könnte allerdings zu der in einer optischen Maus verwendeten Optik eine Zusatz-Optik vorgesehen sein, die so dimensioniert ist, dass sie im Zusammenwirken mit der vorhandenen Linse die im Hauptanspruch definierte Abbildung ergibt. Dieses kann beispielsweise durch eine zusätzliche konkave Linse, etwa nach dem Barlow-Prinzip, oder durch Abbildung in eine Zwischenbild-Ebene erfolgen.

Die Abbildungsvorrichtung kann zweckmäßigenweise für einen auf unendlich eingestellten Focus eingerichtet sein, oder besser noch auf einen solche Abstand, mit dem sich, zuzüglich der Schärfentiefe, ein Schärfebereich von Unendlich bis zu einem kürzestrnöglichen Objektabstand ergibt.

Die Brennweite kann, ausgehend von einer durch den Sensor gegebenen Orts-Auflösung, je nach der erforderlichen Winkelauflösung gewählt werden. Bei der Wahl der Brennweite kann außerdem die erzielte Schärfentiefe (Tiefenschärfe-Bereich) und der maximale Messbereich bezüglich der Geschwindigkeiten berücksichtigt werden. Eine zur Anwendung in ferngesteuerten Klein-Hubschraubem günstige Brennweite liegt in der Größenordnung von 7-25 mm, vorzugsweise ca. 10 -12 mm. Hiermit wird eine ausreichende Winkelauflösung sowie ein ausreichender Geschwindigkeits-Messbereich erreicht, und gleichzeitig eine geeignete Schärfentiefe von ca. 20 cm bis unendlich. Mit Brennweite ist hier die Eigenschaft der Linse gemeint und nicht ihr Abstand (Schnittweite) zur Bildebene.

Die erfindungsgemäße Kombination der Abbildungs-Optik (2) mit einem Verschiebungssensor (3) zu einer Sensoreinheit (5) hat einen kegelförmigen Edassungsbereich, der sich in den freien Raum außerhalb der Vorrichtung erstreckt, und dessen Winkel-Breite durch die Größe der lichtempfindlichen Gesamtfläche des Verschiebungsgssensors und durch die Brennweite des Abbildungsoptik festgelegt wird. Im Gegensatz zu Systemen mit bildgebenden Vorrichtungen wie Videokameras wird in den folgenden Betrachtungen die Winkel-Breite des Erfassungsbereiches meist vernachlässigt und nur die optische Achse oder Haupt-Richtung (11) der Abbildung betrachtet, nachfolgend "Sichtrichtung" genannt.

Gemäß der Erfindung werden Strukturen und Kontraste der Umgebung, des Bodens oder anderer beabstandeter Objekte auf dem Verschiebungssensor optisch abgebildet. Allgemein können die Strukturen, die der beschriebene Sensor zur Erkennung einer Verschiebung benötigt, aus jeder Art von Kontrasten herrühren, die ein Teil der Umgebung oder des Terrains aufgrund von Oberflächentexturen, Details, Konturen oder ähnlichen Eigenschaften aufweist. Diese können beispielweise durch die Ränder einzelner Gegenstände entstehen oder auch, ähnlich wie bei der Funktion einer Optomaus, durch optische Rauhigkeiten auf deren Oberfläche. Fast alle sichtbaren Strukturen, die in einem Bodenbild üblicherweise vorkommen, enthalten genügend solche Kontraste, Strukturen. Texturen, um auch im Flug eine Bildbverschiebung im beschriebenen Verschiebungssensor detektierbar zu machen. Ausnahmen sind Wasseroberflächen, Nebel oder durchgehende Schneedecke.

Indem die Vorrichtung am Vehikel, beispielsweise einem Flugkörper befestigt ist, werden dessen Bewegungen messbar, wie nachfolgend in Punkten a) bis d) beschrieben, ohne hierauf eingeschränkt zu sein.

Allgemein lassen sich sowohl Drehung (a) als auch Translation (b) des Vehikels messen, da beide Bewegungsarten eine Wanderung der optischen Einfallsrichtung des virtuellen Bildes in die Abbildungsoptik bewirken. Über die Abbildung werden Einfalts-Wrnkel in eine proportionale Bitdverschiebung auf dem Verschiebungssensor umgewandelt und können somit gemessen werden. Die Brennweite der Abbildungsoptik ist dabei der Proportionalitäts-faktor.

Je nach Anordnung und Ausführung der vorliegenden Erfindung können verschiedene Messgrößen der Position und Orientierung des Vehikels, also Bahn-Daten über Fahrt- bzw. Flugbewegungen, erfasst und gemessen werden:
a) Um Drehungen des Vehikels zu messen, etwa Rollen, Nicken oder/ oder Gieren, wird die Sensorvorrichtung so montiert, dass der Sichtstrahl, oder zumindest eine vektorielle komponente davon, quer zur Drehachse liegt, und im Sensor die Bildverschiebung in der Komponente senkrecht zur Drehachse gemessen. Um Flugbewegungen zu stabilisieren oder unerwünschte Schwankungen zu verhindern, kann zudem ein Regelkreis gebildet werden, indem der Messwert in einem Istwert-Sollwert-Vergleich zur Bildung eines Stellwertes herangezogen wird, der zur Korrektur an das entsprechende Steuerorgan geleitet wird. Eine für Heading-Stabilisierung geeignete Ausrichtung ist schräg nach vome-abwärts und 1 oder hintenabwärts.

Außerdem lässt sich durch Abtastung in Richtung auf ein Ziel eine Verfolgung erreichen. Hierzu wird wie beschrieben ein entsprechender Regelkreis gebildet Der Stellwert kann eine Nachführung bewirken durch Steuerung der Ausrichtung, oder, als Folge der Ausrichtung, auch eine Kurs-Lenkung auf das Ziel bewirken. In beiden Fällen wird die Ausrichtung der optischen Abtastvorrichtung beeinflusst und unterliegt einer Selbstregulierung. Dies lässt sich zur Zielverfolgung verwenden, auch bei selbst bewegten Objekten. Hierzu wird der Sichtstrahl zunächst auf das Ziel gerichtet; diese Ausrichtung wird über die Regelung beibehalten.

Eine andere Anwendung ist die Dachführung der optischen Vorrichtung über eigene Servomotoren. Dies kann zur Stabilisierung einer Kamera für Film und Foto verwendet werden. Dabei können vorteilhafterweise mehrere störende Bewegungs-Arten stabilisiert werden: Erstens die Wackelbewegungen des Vehikels bzw. Flugkörpers, zweitens das Weglaufen des Bildausschnitts aufgrund der Fahrt, und drittens eine eventuelle Eigenbewegung des Zielobjektes. Herkömmliche Kreiselstablisierungen können nur erstere Einflüsse stabilisieren. Ein weiterer Vorteil ist die schon beschriebene wesentlich schnellere Reaktion eines Verschiebungssensors gegenüber der Bildfrequenz der Filmaufnahme. Eine solche Vorrichtung kann auch zur allgemeinen Verwendung ohne Einschränkung auf ein Vehikel vorgesehen sein. Hierzu befindet sich eine Sensoreinheit, die der in Anspruch 1 definierten Vorrichtung entspricht, zusammen mit einer Kamera auf einer mit Servomotoren bewegbaren Kamera-Plattform und wird hiervon, gemeinsam mit der Kamera, bewegt.
b) Um Translationsbewegungen zu messen, wird die optische Sichtrichtung zumindest in einer vektoriellen Komponente quer zur Richtung der zu messenden Bewegung augerichtet. Das Ausmaß der detektierten Biidverschlebung ist proportional zur Wegstrecke des Vehikels. Entsprechendes gilt für die betreffenden Geschwindigkeiten. Ferner ist die Bildverschiebung, aufgrund der Strahlgeometrie, umgekehrt proportional zum Abstand längs der Sichtrichtung, und proportional zur Brennweite sowie proportional zum Sinus des Winkels zwischen Bewegungsrichtung und Lichtrichtung.

Wenn nur Translationsbewegungn gemessen werden sollen, können die die unter (a) beschriebenen Drehungs-Einflüsse stören. Das optische Messsignal kann um diese Einflüsse bereinigt werden, indem ein die Drehung repräsentierendes Drehsignal mit dem Signal des Verschiebungssensors verrechnet wird. Ein Drehsignal lässt sich, etwa mithilfe eines weiteren Messinstrumentes, etwa eines Gyroskops, leicht gewinnen. Je nach Polarität kann die Verrechnung aus einer Subtraktion, Addition oder, allgemein nennend, einer Mischung bestehen. Dabei können Signale vorher behandelt, beispielsweise differenziert oder integriert worden sein. Dieses Kompensationsverfahren erspart die beim zitierten Stand der Technik übliche kardanische Aufhängung einer optschen Aufnahmevorrichtung (welche dort gewöhnlich eine Videokamera ist).

Um Horizontalbewegungen eines Flugkörpers zu messen, kann die Sichtrichtung um Bezug zum Rumpf nach unten ausgerichtet sein. Dann wandert - bei normaler Fluglage - die messbare optische Einfallsrichtung der erfassten Bodenstrukturen mit der horizontalen Flugbewegung. Mit einem Regelkreis wie oben geschildert, angewendet auf horizontale Bewegungsgrößen, lassen sich folglich auch die horizontalen Bewegungen stabilisieren, z.B. die Geschwindigkeit oder Position über Grund. Bei einem Hubschrauber kann dies zur horizontalen Stablisierung des Schwebeflugs über Ansteuerung der zyklischen Rotorblattverstellung dienen.

Der horizontal Messwert ist wie erwähnt zum Sichtabstand umgekehrt proportional. Um einen davon unabhängigen Messwert zu erhalten, kann ein den Abstand messendes Instrument vorgesehen sein, und - zumindest in einem Teilbereich des möglichen Abstandsbereiches - das, wahlweise um Neigungs-Einflüsse bereinigte, optische Geschwindigkeits-Meßsignal multipliziert werden mit einem Faktor, der mit zunehmendem gemessenen Abstand stetig zunimmt. Zur Distanzmessung eignet sich ein Mikrowellen- oder Ultraschall Radar, wie es als Einpark-Hitfe oder bei Autofokus-Kameras bekannt ist, oder ein optischer Abstandssensor nach dem Lichttaster-Prinzip, wie er etwa in DE 4004530 beschrieben ist. Diese Höhen-Kompensation kann aber auch entfallen oder nur zu einem verminderten Anteil erfolgen, beispielsweise dann, wenn der Messwert nur für eine Stablisierungs-Regelung verwendet wird. Bei einem Hubschrauber konnte eine Stabilisierung der Schwebeposition über eine PID-Regelschleife ohne Höhenkompensation erreicht werden, die, je nach Justage der Regelverstärkungen, bei allen Bodenabständen in einem Verhältnis von bis zu 1 : 10 sehr sauber und im Bereich von 1 : 30 noch ordentlich arbeitet.

Bei Entfallen dieser Kompensation ergibt sich als Vorteil, dass die Messung empfindlicher und demnach die Regelung um so "härter" wirkt, je niedriger die Flughöhe ist. Bei einem vorgegebenen Sollwert für die (unkompensierte) Geschwindigkeit wird die echte Geschwindigkeit In Bodennähe automatisch verringert. Mit diesem Verhalten ergibt sich nebenbei der Effekt, dass im Moment der Geschwindigkeits-Verringerung eine momentane Aufwärtsbewegung erzeugt wird, aufgrund der Umsetzung der kinetischen Energie (außer bei Rückenwind schneller als Groundspeed). Bei Horizontalflug über Bodenerhebungen wird somit einer Kollision durch kurzfristiges Aufsteigen vorgebeugt. Dieses Verhalten kann auch bei vorhandener Höhenkompensation erreicht werden, nämlich dadurch, dass das kompensierende Höhensignal zeitlich verzögern wird.
c) Bei ungefähr bekannter Geschwindigkeit kann auch ein Abstand gemessen werden, beispielsweise zum Boden oder zu einem Objekt. Hierzu wird das optische Meßsignal als Reziprokwert für den Abstand herangezogen. Zum Beispiel kann eine bekannte Geschwindigkeit durch den optischen Geschwindigkeits-Messwert dividiert werden. Bei Verwendung dieses Messwertes in einem Regelkreis kann die Division entfallen, sofern der Sollwert schon als Kehrwert definiert wird.

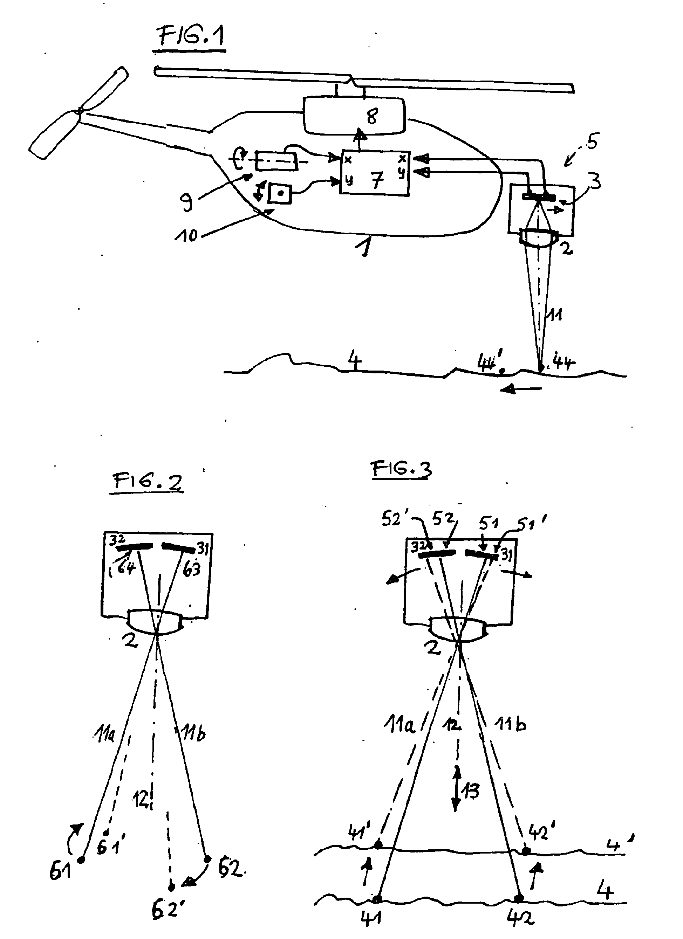

Eine Anwendung ist die Kontrolle des Bodenabstandes bei Tragflächen-Flugzeugen. Da hier die horizontale Fluggeschwindigkeit ungefähr bekannt und meist in etwa konstant ist, erhält man ein Maß für die momentane Flughöhe über Grund, auch während Überfliegen von Bodenerhebungen. Somit wird eine frühzeitige Annäherungs-Erkennung und Kollisionsvermeidung gegenüber sichtbaren Gegenständen möglich. Die Flughöhe kann auf einen Mindest-Bodenabstand begrenzt oder geregelt werden. Die Sichtrichtung kann hierfür vorteahatterweise schräg nach vome-unten ausgerichtet sein, um einen zeitlichen Vorlauf zu erhalten Anstelle zum Boden kann kann auch der Abstand zu einem dort stehenden Objekt gemessen werden, welches beispielsweise eine Erhebung bildet
d) Allgemein können Bewegungen in mehreren verschiedenen Koordinaten gemessen und in Relation zueinander gesetzt werden. Somit können gemischte Messwerte auch voneinander getrennt werden, wie in unten beschriebenen Ausführungsbeispielen und Figuren 2 bis 4 erläutert. Ferner ist eine Messung von Abständen und Abstandsänderungen auch längs einer kombinerten Sichtrichtung möglich. Hiermit ist die Messung einer Steig-bzw. Sinkrate, oder eine Annäherungs-Erkennung möglich.

Die verschiedenen Messgrößen werden hier allgemein "Bewegungsgrößen" genannt Dies gilt sowohl für die Orts- als auch für die Winkelgrößen. Bewegungsgrößen können statischer Art sein, wie beispielsweise Position, Abstand, oder Lage, und /oder dynamischer Art sein, wie beispielsweise Geschwindigkeit und Beschleunigung. Dementsprechend werden die Begriffe "Bewegung, Drehung, Neigung, Translation" etc. hier stets allgemein verwendet, d.h. sowohl für Positions-Werte auch für die entsprechenden Änderungs-Geschwindigkeiten.

Bewegungsgrößen können relativ zum Boden, zu boden-bezogenen, bewegten oder auch zu anderen fliegenden Objekten gemessen werden.

Das Ausgangssignal des optischen Sensors, nachfolgend kurz "Sensorsignal" genannt, kann erfindungsgemäß auf mehrere Arten, die im Folgenden beschrieben werden, ausgewertet und verarbeitet werden. Optomaus-Sensoren haben häufig für jede der zwei Koordinaten einen Quadratur-Ausgang, der auf 2 Leitungen ein Inkremental-Signal liefert, wobei jede Verschiebung als Sprung oder als eine Anzahl von Sprüngen von Stufe zu Stufe richtungsgetreu gemeldet wird. Ebenso kann eine serielle Schnittstelle oder eine andere beliebige Art der Signalübertragung zur Ausgabe der Daten verwendet werden. Häufig werden bei jedem Auslesevorgang die seit dem vorigen Auslesen erfolgte Anzahl der Änderungssprünge ausgegeben.

Durch entsprechende Auswertung lassen sich beispielsweise, ohne hierauf eingeschränkt zu sein, Informationen gewinnen über a) Richtung und Geschwindigkeit bzw. Winkelgeschwindigkeit der Bewegung, also Änderungsraten, b) Die Weite der Bewegung, also Positions- oder Winkel-werte, c) Beschleunigungswerte.
a) Änderungsraten lassen sich darstellen mittels einer zeitlichen Differenzierung. Dies entspricht einer Frequenzmessung der inkrementalen Verschiebungssprünge. Bei einem Sensor, der die Verschiebung in einzelnen inkrementalen Sprüngen ausgibt, wird hierzu die Frequenz dieser Sprünge gemessen, etwa die Frequenz der ausgegebenen Quadratursignale.

Es ist vorteilhaft, wenn der Geschwindigkeits-Messwert kontinuierlich oder zumindest quasikontinuierlich dargestellt wird. Zur Gewinnung eines geeigneten Geschwindigkets-Messwertes kann in fortlaufenden Zeitintervallen, die sinnvollerweise klein gewählt werden können, die jeweilige Summe der pro Intervall auftretenden Ausgangssprünge mit Vorzeichen herangezogen werden, etwa mittels Auf- und AbwärtszäMung oder durch Auslesen der seit der letzten Ausgabe erfolgten Änderung, und dann die erhaltene Summe jeweils durch die Länge des Zeitintervalls dividiert werden. Haben die Zeitbaschnitte konstant die gleiche Länge, so kann die Division entfallen. Alternativ kann bei jedem Änderungs-Sprung des Signals die Zeitspanne seit dem vorangehenden Anderungssprung ermittelt werden, davon der Kehrwert gebildet werden und mit einem der Änderungsrichtung entsprechenden Vorzeichen versehen werden.

Zusätzlich kann der so ermittelte Frequenzwert auch vor Eintreffen der nächsten Änderung rechnerisch schon aktualisiert werden Hierzu wird, nach Ablauf einer der Frequenz entsprechenden Periodendauer, der Frequenzwert fortwährend oder schrittweise heruntergesetzt auf einen Wert, der dem Kehrwert der aktuell verstrichenen Wartezeit entspricht, sofern der Kehrwert kleiner ist als der letzte Frequenzwert.
b) Positionswerte lassen sich darstellen durch Auf-/ Abwärtszählung oder Summierung der Inkrement-Sprünge des Sensorsignals, etwa indem man die Sprünge richtungsgetreu zählt oder die Inkremente integrieren aufsummiert, vergleichbar mit der üblichen Funktion einer Computermaus auf einem Bildschirm.

Alternativ oder in Kombination hierzu kann die Position durch eine fortlaufende zeitliche Integration eines Frequenz-Messwertes dargestellt werden, dessen Gewinnung wie oben beschrieben erfolgen kann.

Dies ermöglicht, dass man eine oben beschriebene Kompensation der Einflüsse anderer Bewegungen auf die Messung schon vor der Integration vornehmen kann, und man die integrierten Ergebnisse schon kompensiert erhält.

Je nach Ausgestaltung resultieren auch betreff der Positionsmessung verschiedene Mess-Möglichkeiten. Bei Sichtrichtung nach unten erhält man ein Maß für die bodenbezogene Flugposition.

Unter Benutzung eines aus der erfindungsgemäßen Vorrichtung stammenden Messwerts kann ein Regelkreis gebildet werden, wobei in einem Regler (7) der Messwert zur Erzeugung eines Stellwertes herangezogen wird, der die Bewegung regelt. Hierbei können die als PID bekannten Verfahren verwendet werden istwerte können beliebiege erfindungsgemäß erzeugte Messwerte sein, also sowohl Geschwindigkeits- als auch Positionsgrößen oder anteilweise eine Mischung. Zusätzlich können auch einfache oder mehrfache Integral- und Differenziatwerte gebildet und herangezogen werden. Durch erneutes Differenzieren des Frequenz-Messwertes kann man beispielsweise ein Maß für die Beschleunigung erhalten. Zusätzlich kann eine PID-Regelung auch die Proportional Differenzial- und / oder Integral-Anteile von Signalen anderer Bordinstrumente heranziehen, z.B. eines Piezo-Kreisels.

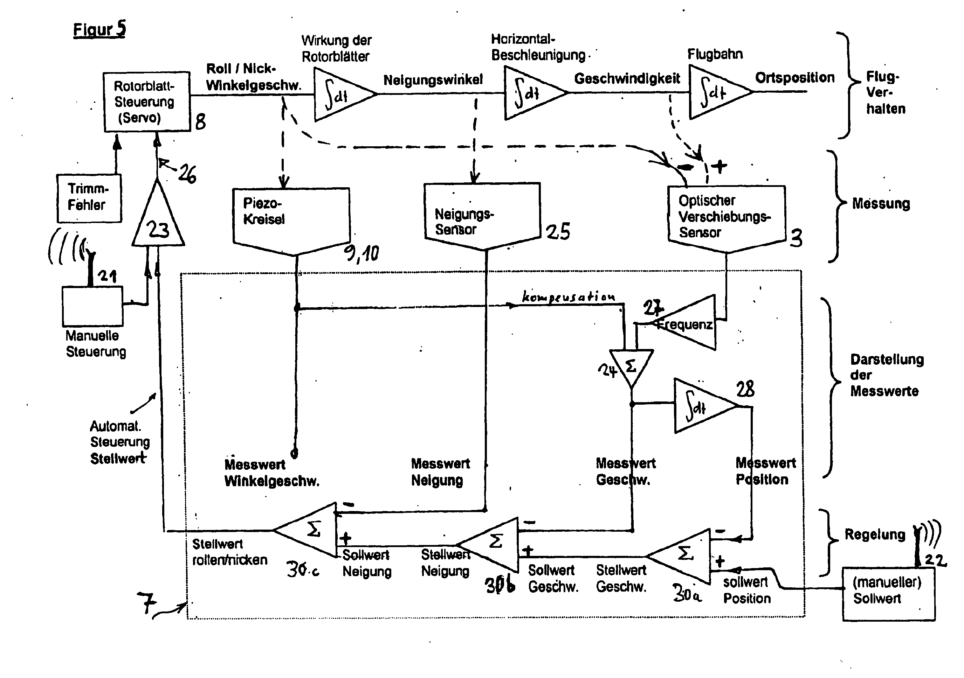

Manuelle Steuersignale können sowohl dem Ausgangssignal des Reglers (Stellwert) überlagern werden, sodass die Handsteuerung ergänzt und stabilisiert wird, als auch in die Regelung als Sollwert einbezogen werden, z.B. indem sie eingangsseitig dazugemischt werden, sodass ein Sollwert-Istwert-Vergleich entsteht, wobei der Sollwert aus dem manuellen Steuersignal stammt. Eine detaillierte Beschreibung einer Regelung folgt beim ersten Ausführungsbeispiel und bei Figur 5.

Bei ferngelenkten Flugkörpern können die zur Regelung benötigten Teile mitfliegen oder auch am Boden stehen und über Funkkontakt verbunden sein.

Statt eines Optomaus-Sensors können auch andere optoelektronische Vorrichtungen als Verschiebungssensor verwendet werden. Der Verschiebungssensor kann mindestens zwei benachbart angeordnete photoelektrische Lichtempfänger enthalten, deren Distanz zueinander einer Größenordnung entspricht oder ungefähr ähnelt, die der Viertefwellenlänge von im Abbild der Bodenstrukturen häufig vorkommenden Ortsfrequenzen entspricht Durch die Bewegung der optischen Strukturen entstehen in den Lichtempfängern phasenverschobene Wechselsignale. Diese Wechselsignale werden in eine die Zeit- und / oder Phasenunterschiede auswertenden Schaltung geleitet. Eine solche Schaltung kann eine Zeitvergleichsschaltung sein, wie sie bei richtungsempfindlichen Lichtschranken verwendet wird, oder eine Phasenvergleichsschaltung. Eine solche Schaltung erkennt an der Phasenlage, welche der beiden Signale dem anderen vorauseilt bzw. hinterherhinkt, und dementsprechend die Bewegungsrichtung, und zu einem gewissen Genauigkeitsgrad auch die Geschwindigkeit. Auch kann die Schattung einer Inkremental-Auswertung nach dem Quadratur-Prinzip entsprechen und dementsprechend analog oder digital aufgebaut sein. Die Messgenauigkeit einer solchen Vorrichtung ist jedoch meist geringer als die eines mit Array und integrierter Auswertelektronik ausgestatteten Verschiebungssensors, da der gleichzeitig erfasste Abschnitt der Bodenstrukturen kleiner ist.

Das optische Abbild kann wahlweise mit einem Restlichtversärker verstärkt oder einer anderen zwischengeschalteten optischen Vorrichtung behandelt werden, bevor es auf den Verschiebungssensor gelangt.

Alle beschriebenen Signalverarbeitungs- und Rechenvorgänge können digital erfolgen, z.B. in einem programmgesteuerten Mikroprozessor, oder in einer analogen Schaltung verwirklicht werden. Mehrere der hier beschriebenen oder in den Anprüchen bezeichneten Teil-Verfahren können zu einem gemeinsamen Prozess zusammengefasst werden und / oder in einem gemeinsamen Prozessor durchgeführt werden.

Die beschriebenen Verfahren können auch mit Infrarotlicht erfolgen.

Dementsprechend beinihalten die Begriffe "Sicht-", "Licht und "Abbildung" stets alle optischen Strahlungsarten.

Für Verwendung im Dunkeln kann die entsprechende Vonichtung mit einer Lichtquelle kombiniert werden. Vorzugsweise hat sie eine gerichtete Abstrahlung und ist auf die abzutastende Stelle ausgerichtet.

Folgend wird an Ausführungsbeipielen die Funktion weiter erläutert. Es zeigen:
Figur 1: Erstes Ausführungsbeispiel, zur Hubschrauber-Stabilisierung
Figur 2: Zweites Ausführungsbeispiel, zur Messung und Stabilisierung einer Drehung um die Hochachse.
Figur 3: Drittes Ausfühnrngsbeispiel, zur Messung einer Vertikalgeschwindigkeit oder eines Abstandes zu einem Objekt.
Figur 4: Viertes Ausführungsbeispiel zur kombinierten Messung mehrerer Freiheitsgrade.
Figur 5: Blockdiagramm einer Regelung im ersten Ausführungsbeispiel

Figur 1 zeigt ein erstes Ausführungsbeispiel zur Messung und Stabilisierung der Horizontalbewegungen eines Hubschraubers (1). Die Linse (2) wirkt als Objektiv und bildet einen sichtbaren Abschnitt des Bodens (4) auf den optischen Verschiebungssensor (3) mit integrierter Auswert-Einheit ab. Bei einer Vorwärtsbewegung wandert Bodenpunkt (44) optisch zur Position 44', und dementsprechend verschiebt sich sein Abbild auf dem Sensor (3). Der Sensor gibt die inkrementellen Messwerte der Verschiebung in zwei Koordinaten (x und y) aus. Wenn die Sichtrichtung wie gezeichnet ungefähr nach unten ausgerichtet ist, erhält man Informationen über Fluggeschwindigkeit über Grund, in beiden Komponenten Vorwärts- und Quer-Richtung.

Diese Messwerte können zur Stabilisierung der Flugroute oder eines stillstehenden Schwebefluges verwendet werden. Hierzu ist die Regel-Elektronik (7) eingangsseitig mit den optischen Meßsignalen verbunden und gibt ausgangsseitig Stellwerte zur Steuerung des Flugkörpers, wobei zumindest Teile der gesamten Steuerung beinhaltet sind - in diesem Fall die zyklische Rotorhlattversteltung (8), etwa mit einer Taumelscheibe, welche die Neigung der Hauptrotor-Ebene steuert und damit die horizontale Beschleunigung des Helikpoters beeinflusst. Ein Beispiel für die Funktion einer Regelung (7) ist weiter unten sowie bei Figur 5 detailliert dargestellt.

Der Messwert ist jedoch nicht nur von der Hortzontalbewegung, sondern auch von Drehbewegungen abhängig, die der Flugkörper gleichzeitig ausführen kann, etwa Rollen und Nicken. Dieser Einfluss wird durch Beimischung eines Drehsignals kompensiert. Das Drehsignal kann beispielsweise zur Winkelgeschwindigkeit der Drehung proportional sein, oder auch zu anderen Drehgrößen wie beispielsweise der Winkelstellung. Verschiedene Möglichkeiten zur Gewinnung eines zur Kompensation geeigneten Drehsignals sind nachfolgend beschrieben.

Das Drehsignal kann mit einem Kreisel oder einem piezoelektrischen Drehsensor (9), (10) (Piezo-Gyro) gewonnen werden. Solche zusätzlichen Meßaufnehmer können am Flugkörper angebracht sein oder in der erfindungsgemäßen Vorrichtung (5) an- oder eingebaut sein. Weil ein Piezo-Gyro die Winkelgeschwindigkeit misst, erfolg die Kompensation sinnvollerweise durch Mischung des Gyro-Signals in ein vom Verschiebungssensor, etwa durch Differenzierung, gewonnenes Frequenz-Signal, das schon die Geschwindigkeit repräsentiert.

Bei einem Helikopter kann ein Drehsignal erzeugt werden, indem ein Beschleunigungssensor mit der Hauptrotorwelle mitbewegt und von der Rotorachse beabstandet angeordnet ist, wobei die Beschleunigungskomponente parallel zur Rotorachse gemessen wird und der fortlaufende Messwert in Abhängigkeit der Rotordrehung zyklisch phasenbezogen ausgewertet wird. Drehungen der Rotorebene bewirken wie bei einem Kreisel Präzessionskräfte, die im Beschleunigungssensor als zyklisch sich ändernde Beschleunigungen auftreten und gemessen werden. Die Amplitude der Änderung ist ein Maß für die Winkelgeschwindigkeit der zu messenden Drehung; die Phasenlage gegenüber der Rotordrehung ist ein Maß für die Richtung der zu messenden Drehung und die Orientierung ihrer Achse. Die phasenbezogene Auswertung kann geschehen, indem eine mit der Rotordrehung synchronisierte getaktete Sampling-Folge erzeugt wird, nach deren Takt das Meßsignal aufgeteilt gemessen oder umgeschaltet wird, beispielsweise in Quadranten. Hierdurch erhält man Messwerte der Drehung in Komponenten, etwa der Nick- und Roll-Achse, aufgeteilt. Die Synchronisation kann über einen die Umdrehungen der Rotorwelle abtastenden Drehgeber erfolgen. Vorteühaflerweise treten die gemessenen Kräfte als zyklische Änderungen auf. Daher muss der Beschleunigungssensor keine absoluten Werte messen können, sondern nur die Änderungen. Daher kann als Beschleunigungssensor ein preisgünstiger piezoelektrischer Kraftwandler verwendet werden, dessen Messwert nur kapazitiv angekoppelt werden kann. Außerdem ergibt sich der Vorteil, dass Nullpunktfehler des Messwertes von vorne herein dadurch entfallen, dass der Messwert in Form einer Amplitude gewonnen wird. Eine Signalabertragung vom rotierenden Sensor zur Regelvorrichtung kann über Funk, optoelektronische Wandler, induktive Signal-Ankopplung oder Schleifkontakt erfolgen. Dieses Messverfahren kann auch ohne optische Messung allgemein zur Stabilisierung eines Drehflüglers verwendet werden, dessen Neigung in Abhängigkeit eines Messwertes geregelt wird. Hierzu genügt es, wenn ein Beschleunigungssensor mit der Hauptrotorwelle mitbewegt und von der Rotorachse beabstandet angeordnet ist, und die Beschleunigungskomponente parallel zur Rotorachse gemessen wird, und der fortlaufende Messwert in Abhängigkeit der Rotordrehstellung und synchron dazu zyklisch phasenbezogen ausgewertet wird.

Um auch ohne Verwendung eines eigenen Sensors ein Drehsignal zur Kompensation der Dreh-Einflüsse zu erhalten, kann als Drehsignal ein Steuersignal herangezogen werden, das in ein Steuerorgan eingespeist wird, welches die betreffende Drehung steuert, z.B. das ServoSignal für die Taumelscheiben-Neigung. Das funktioniert, weil üblicherweise der Flugkörper mit einer Roll- bzw. Nick-Geschwindigkeit folgt, die recht genau zur Ansteuerung proportional ist Ein solches Steuersignal ergibt daher ein geeignetes Maß für die Winkelgeschwindigkeit zur Verwendung als kompenserendes Drehsignal. Dabei erfolgt die Kompensation durch Mischung des Steuersignals in das aus dem Verschiebungssensor gewonnene Geschwindigkeits-Signal, welches durch Frequenzmessung darstellbar ist. Wenn das Steuersignal selbst mittels eines erfindungsemäßen Regelkreises erzeugt wird, dessen Istwert das zu kompensierende Meßsignal beinhaltet, dann entspricht die Kompensation einer Rückmischung innerhalb des Regelkreises in Form einer Gegenkopplung vom Stellwert zum Istwert, welcher die Regelvertärkung herabsetzt. Die kompensierende Einmischung des Drehsignals kann in diesem Fall, funktionsmäßig identisch, dadurch realisiert werden, dass Regelkreis einfach eine entsprechend geringere Verstärkung aufweist.

Eine alternative oder kombinierbare Möglichkeit zur Gewinnung eines Drehsignal ist, hierzu einen zweiten optischen Verschiebungssensor zu verwenden, der erfindungsgemäß wie beschrieben als Drehsensor arbeitet und mit seiner Sichtrichtung gegenüber dem ersten Sensor verschieden ausgerichtet ist.

Figur 5 zeigt beispielhaft ein Blockdiagramm einer Regeleinheit (7) für Hubschrauber. Der Regelkreis kann für die Nick- und Roll-Achse gleichermaßen aufgebaut sein und ist daher nur ein Mal abgebildet. Bei herkömmlichem manuellen Betrieb werden Steuersignale über den Empfänger 21 an die Rotorblatt-Steuerung 24 gegeben. Die erflogene Ortsposition resultiert aus dem Flugverhalten, das einer Reihe mehrerer zeitlichen Integrationen entspricht, wie selbsterklärend abgebildet. Die Gesamtheit dieser Bewegungsgrößen stellt für jeden Zeitpunkt die aktuelle Flugbewegung dar. Der Einfluss der Bewegungen auf die Messung ist gestrichelt dargestellt. Unterhalb der Messinstrumente (9 /10), (25), (3) sind die Abläufe der Regeleinheit (7) dargestellt, aufgeteilt in die Darstellung der Messgröβen und die Regelung selbst mit Istwert-Sollwert-Vergleich.

Aus dem Signal des Verschiebungssensors (3) wird zunächst eine Frequenz ermittelt (27) Die Frequenz kann wie beschrieben um die Einflüsse der Neigung und ggf. Flughöhe bereinigt werden. Dies geschieht hier durch Addition (24). Die nachträgliche Integration (28) kann eine Summierung oder Zählung sein, und stellt ein Positions-Signal her, wobei die differenzerende Wirkung der Frequenzmessung wieder rückgängig gemacht wurde.

Ein Sollwert des Flugweges oder der Fluggeschwindigkeit sei vorgegeben. Das kann beispielsweise ein Geschwindigkeits- oder Ortsvektor sein, parametrisiert als Funktion der Zeit. Diese Funktion kann vor dem Flug programmiert sein oder während des Fluges vorgegeben werden, oder im Spezialfall des Schwebefluges Null sein (als Geschwindigkeits-vektor) bzw. konstant (als Ortsvektor). Der aktuelle Sollwert wird aufgerufen, etwa über den Funk-Empfänger 22, und mit dem optischen Messwert durch Subtraktion (30a) verglichen. Die ermittelte Differenz entspricht der Momentan-Abweichung von der Soll-Route (in 30a) bzw. Soll-Geschwindigkeit. Im (gezeichneten) Falle eines Ortsvorgabe-Sollwertes kann die Regelung erfolgen, indem zunächst die Ortsabweichung (30a) als Stellwert für eine Rückflug-Geschwindigkeit definiert wird und diese Geschwindigkeit wiederum geregelt wird (30b). Nach dem PID-Verfahren kann gleichbedeutend auch eine Mischung aus Orts- und Geschwindigkeits-Messwerten gemeinsam geregelt werden.

Proportional und entgegensesetzt zur Abweichung der Geschwindigkeit wird ein Neigungs-Stellwert (30b) definiert, gemäß dem die Neigung der Hauptrotor-Ebene gesteuert werden soll. Auf die Neigung würde der Helikopter mit einer zur Neigung proportionalen Horizontal-Beschleunigung reagieren, somit würde sich die Fluggeschwindigkeit proportional zum zeitlichen Integral der Neigung ändern und der Regelkreis wird geschlossen.

Um die Neigung auf den Sollwert zu bringen, werden die Stellglieder der Taumelscheibe (8) gesteuert. Da der Hubschrauber eine Steuerung seiner Neigung aber nicht direkt, sondern nur über die Geschwindigkeit ihrer Änderung (Winkelgeschwindigkeit) erlaubt, ist die Neigung aus der Stellung der Stellglieder nicht direkt bekannt Zur Regelung der Neigung ist es daher von Vorteil, wenn ein eigener Messwert hiervon verfügbar ist. In Figur 5 ist hierfür ein Neigungssensor (25) vorgesehen, der einen eigenen Sollwertvergleich (30c) ermöglicht. Das Resultat wird über einen Mischer oder Umschalter (23) als Stellwert (26) an die Rotorsteuerung (8) gegeben.

Als Neigungssensor kann z.B. eine Vorrichtung gemäß erwähnter RU 9300250 verwendet werden. Diese ist jedoch ungenau. Alternativ oder zusätzlich kann aus dem Signal eines Piezo-Kreisels (9, 10), das die Neigungs-Winkelgeschwindigkeit angibt, dessen zeitlichem Integral gebildet werden, und somit, gemäß der Funktion eines künstlichen Horizontes, die Rotomeigung darstellt. Problemabschecweise fällt jedoch bei der Integration eine undefinierte Integrationskonstante an, entsprechend einer unbekannten Schräglage des Horizontes. Sie kann von der Lage im Moment des Einschaltens sowie auch von geringen Driften verrühren und würde die Regelung erheblich stören.

Die Neigung kann gemessen werden, indem eine aus dem optischen Verschiebungssensor (3) gewonnene, zur Geschwindigkeit proportionale Messgröße (24) in mindestens einem Teil ihres Frequenzbereiches zeitlich differenziert wird. Dies funktioniert deshalb, weil der Helikopter in üblichen Flugsituationen proportional zu seiner Neigung beschleunigt, und die Beschleunigung durch Differenzierung der gemessenen Geschwindigkeit dargestellt werden kann.

Durch den Differenzial-Vorgang auf das optische Meßsignal, das in Stufen ausgegeben wird, können jedoch aus den Inkrement-Sprüngen störende Unstetigkeiten entstehen.

Der Messwert für die Neigung hergestellt werden als eine Kombination aus sowohl der vom Verschiebungssensor erhaltenden und zeitlich differenzierten Messgröße als auch dem zeitlich integrierten Signal eines zur Winkelgeschwindigkeit der Neigung proportionalen Drehsignals. Hierbei können vom differenzierten Messwert insbesondere die höherfrequente Spektralanteile geringer gewichtet werden und vom integrierten Signal die niederfrequenteren Spektralanteile und der Gleichsignal-Anteil geringer gewichtet werden. Auf diese Weise sind sowohl die geschilderten Probleme der Integrationskonstante und Nullpunkt-Drift gelöst, da se durch Herausnehmen der tiefen Spekralanteile wegfallen, als auch der Unstetigkeiten, da sie durch Absenkung der hohen Spektralanteile geglättet werden. Die jeweils fehlenden Anteile können durch das andere Signal ersetzt werden. Die auf das optische Meßsignal resultierende Kombination von Differenzieren und Tiefpass kann gleichbedeutend auch als Hochpass ersten Grades dargestellt und erzeugt werden; die auf das Gyro-Sgnal resultierende Kombination von Integrieren und Hochpass kann gleichbedeutend auch als Tiefpass ersten Grades dargestellt und erzeugt werden.

Als Drehsignal für diese Neigungs-Regetung kann jedes der schon bei der Dreh-Kompensation (gemäß Anspruch 23) beschriebenen Verfahren verwendet werden, wie etwa Piezo-Kreisel oder Steuer-Stellwert. Alternativ oder in Kombination hierzu kann auch hier das Drehsignal wie oben beschrieben erzeugt werden.

Die Regelung der Neigung kann mit der Regelung der Horizontal-Bewegung zusammengefasst werden, indem die beschriebenen Messgrößen sowohl für Neigung als auch für Bewegung (Geschwindigkeit und /oder Position) gemischt und somit gemeinsam geregelt werden.

Die explizite Trennung der Vorgänge "Darstellung der Messwerte" und "Regelung" erfolgte zum besseren Verständnis, ist aber für die Realisierung nicht wesenlich. Allgemein können proportionale, differenzierte und ggf. integrierte Anteile des optischen Meßsignales parallel in den Reglekreis eingemischt werden, was dazu führt, dass die beschriebene Regelung in ihrer Gesamtheit gleichbedeutend in Form einer gemeinsamen PID-Regelschleife realisiert werden kann.

Durch Verwendung eines Integral-Signal-Zweiges im Regelkreis wird eine ortsfeste Regelung erreicht, wodurch ein Schwebeflug so stabilisiert wird, dass auch nach zeitweisen Abweichungen wie Störungen, Windstöße und dgl, die ursprüngliche Position wieder hergestellt wird.

Durch Berechnung eines Integrals aus den Verschiebungswerten kann ein orts-proportionaler Messwert gewonnen werden. Bei der Ermittlung der absoluten Ortsposition in bodenbezogenen Koordinaten können die Gier Bewegungen kompensiertend berücksichtigt werden werden. Hierzu können die inkrementellen Sensorsignale beider Sensor-Koordinaten integrierend aufsummiert werden, wobei, stellvertretend für zwei Bodenkoordinaten, zwei Integrationssummen vorzusehen sind, und wobei die Ausrichtung des Sensors bezüglich einer zu den Bodenkoordinaten senkrechten Drehachse zusätzlich gemessen wird, und die aufzusummierenden Sensorsignale-Inkremente vor ihrer Aufsummierung vektoriell gedreht werden, gesteuert von der gemessenen Ausrichtung.

Ein Sollwert kann, anstatt für eine Position, auch für eine Geschwindigkeit vorgegeben werden. Ein solcher Sollwert kann zunächst integriert werden und dann als Positions-Sollwert verwendet werden. Es kann auch auf die ortsproportionalen Ist- und Sollwerte verzichtet werden und die Regelung auf die Geschwindigkeiten beschränkt werden. Die Mischung (30a) und Integration (28) können weggelassen werden und der manuelle Stellwert (22) kann direkt einem Geschwingkeits-Vergleich (30b) zugeführt werden.

Die beschriebenen Regelverfahren, insbesondere die zur Regelung der Neigung eines Hubschraubers, können auch ohne Verwendung eines optischen Sensors zur Flugstabitisierung verwendet werden. Hierbei kann auf die ortsproportionalen Ist- und Sollwerte verzichtet werden und die Regelung auf den Neigungswinkel beschränkt werden.

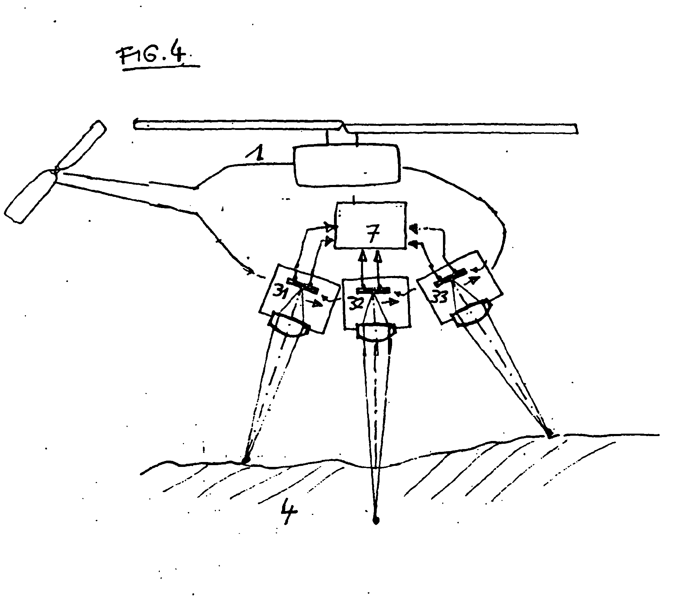

Anstelle des optischen Sensors (3) oder in Kombination hiernit kann ein beliebiges nach dem Stand der Technik bekanntes Navigationssystem verwendet werden, um Istwerte (28) der Position oder der Geschwindigkeit zu gewinnen und damit das hier beschriebene Regelverfahren zu verwirklichen. Hierzu muss das hier beschriebene Regelverfahren nur so abgewandelt werden, dass der Sensor (3) und die Frequensmessung (27) entfällt und ein Positions-Messwert (28) und / oder Geschwindigkeits-Messwert von einem alternativen Meßsystem herangezogen wird. Figur 2 zeigt ein zweites Ausführungsbeispiel nach Anspruch 36 und 37: Zur Messung einer Drehbewegung oder-Geschwindigkeit sind mindestens zwei Verschiebungssensoren (31) und (32) vorhanden. Beide Sensoren können hinter einer gemeinsamen Linse (2) oder sonstigen Abbildungsoptik versetzt angeordnet sein, oder auch eigene Abbildungsoptiken haben, wie in Figur 4 gezeigt. Die sich hierdurch ergebende Anordnung kann als eine körperlich vereinte Vorrichtung oder in separaten Einheiten aufgebaut sein. Die Sichtrichtungen der verschiedenen Sensoren sind in vorgegebenen Winkeln divergierend ausgerichtet. Für die meisten Anwendungen eignen sich spitze Winkel. Damit sind beide Sichtrichtungen ähnlich und ergeben eine gemeinsame Haupt-Sichtrichtung, die man etwa als die Winkelhalbierende annehmen kann. Drehungen um eine Achse in oder nahe der Winkelhalbierenden haben für die Abbilder der Bodenpunkte (61, 62) Bilverschiebungen in tangentialer Richtung zur Folge. Dem entsprechend sind die Sensoren (31, 32) so ausgerichtet, dass sie tangentiale Verschiebungen erkennen. Die in beiden Sensoren gemessenen Tangential-Verschiebungen können miteinander in Rotation gesetzt werden, etwa durch Subtraktion, Mischung, Vergleich oder allgemein einer Überlagerung der Messwerte beider Sensoren.. Auf diese Weise wird der tangentiale Anteil der Verschiebungen herausgefiltert, die Messung wird von anderen Bewegungen weitgehend unabhängig. Der Signalvergleich kann aus einer Mischung oder allgemein Überlagerung bestehen. Wenn die Einzel-Messwerte vor der Mischung verschieden gewichtet werden, so kann die Lage der Drehachse definiert verändert werden. Gleichzeitig kann eine andere Mischung der Messwerte einen anderen Messwert liefern, z.B. nach gemäß dem ersten Ausführungsbeispiel, wozu man eine Summe gleichgerichteter Bewegung verwenden kann. Statt Überlagerung kann allgemein jede bekannte Art des Signalvergleichs verwendet werden.

Figur 3 zeigt ein drittes Ausführungsbeispiel nach Anspruch 36 und 38. Es eignet sich zur Messung einer Entfernung oder Entfemungsänderung oder Annäherungs-Geschwindigkeit. Es wird die in Figur 2 beschriebene Anordnung verwendet, aber statt tangentialer BildVerschiebungen eine radiale Komponente der Bildverschiebung gemessen. Durch eine Subtraktion beider Sensorsignale oder allgemein eine Überlagerung beider Messwerte, wird der radial gegenläufige Anteil der Verschiebungen heraugefiltert. Bei Annäherung des Objektes bzw. Bodens (4) in die Position (4') wandert ein sichtbarer Punkt (41) in die Stellung (41) und sein Abbild auf dem Sensor (31) von Stellung (51) in radialer Richtung zu (51'). Gleiches gilt am Sensor 32 für die Punkte (42, 42') und Bilder (52, 52'). Aufgrund der Strahl-Geometrie wandert die gemessene Winkeldiferenz proportional zu einer Änderung der Distanz, und umgekeht proportional zum Quadrat der absoluten Distanz. Bei ungefähr bekannter Distanz kann somit die Änderung gemessen werden, und, wenn man von einem Änderungs-Signal ausgeht, die Längs-Geschwindigkeit.

Im Unterschied zur Abstandsmesssung nach Anspruch 31 wird hier nicht der Absolutwert des Abstandes, sondern die Änderungsrate gemessen. Auch ist es hier nicht nötig, dass eine andere Geschwindigkeit in Querrichtung vorhanden und bekannt ist. Bei vertikaler Sichtrichtung ergibt sich die Messung einer Sink- bzw. Steigrate.

Wenn umgekehrt die Geschwindigkeit in etwa bekannt ist, kann mit der gleichen Anordnung anstelle der Geschwindigkeit auch die Absolut-Distanz ermittelt werden. Da sich Messwert quadratisch zum reziproken Abstand verhält, ist die Genauigkeit des gemessenen Abstandes doppelt so gut ist die, mit der die Geschwindigkeit bekannt ist.Wenn z.B. die Geschwindigkeit nur auf ±10% genau bekannt ist, variiert der gemessene Abstand demzufolge nur um 5%.

Alle beschriebenen Mess-Verfahren für Abstände oder Annäherungsgeschwindigkeiten können verwendet werden zur Kollisionserkennung, etwa zum Antizipieren oder zum Vermeiden der Kollision.

Neben der Summe der Radialverschiebung kann auch die Differenz gebildet werden, also die Summe der gleichsinnigen Translation. Somit lassen sich gleichzeitig auch Quer-Bewegungen in den anderen beiden Achsen messen.

Die anhand Figuren 2 und 3 beschriebenen Messverfahren für Drehung und Annäherung können dadurch kombiniert werden, dass von jedem der mindestens zwei Verschiebungssensoren die Messwerte beider Koordinaten ausgewertet werden.

Figur 4 zeigt ein viertes Ausführungsbeispiel. Drei Sensoren (31, 32, 33) sind mit ihren Sichtrichtungen in drei verschiedenen, zum Beispiel orthogonalen Richtungen angeordnet, wobei jeder Sensor 2 Mess-Richtungen haben kann. Es ergeben sich bis zu 6 Messwerte. Die Sicht-Richtungen können, müssen aber nicht orthogonal sein. Für eine Flug-Stabilisierung können alle drei Sichtrichtungen auf den Boden gerichtet sein wie die Füße eines Stativs. Die Messwerte der schrägen Sichtrichtungen können durch rechnerische Mischung gemäß einer Drehmatrix leicht in die zur Steuerung relevanten geraden Koordinaten umgewandelt werden. Mit solcher Anordnung lässt sich eine Orientierung in allen sechs Raumkoordinaten erreichen und die Flugbewegung in allen Komponenten erfassen und stabilisieren. Alle Messwerte können bereinigt werden um die durch Drehung verursachten beschriebenen Einflüsse, indem drei unabhängige Dreh-Sensoren vorgesehen sind. Die Drehachsen dieser Sensoren können einfachheitshalber in das gleiche Vektor-System ausgerichtet werden.

Diese unabhängigen Dreh-Sensoren lassen sich aber auch einsparen. Um jeweils einen der Sensoren (31), (32), (33) zu kompensieren, benützt man die Signale eines oder beider der übrigen Sensoren, wobei diese übrige Sensoren gemäß zur Drehungs-Messung herangezogen werden, und benutzt deren Messwert als Drehsignal zur Kompensation des ersteren Sensors gemäß Anspruch 23.

Allgemein können beliebige der hier beschriebenen Messverfahren miteinander kombiniert werden. Ferner können hierdurch störende Einflüsse einer Bewegungskomponente auf die Messung einer anderen Bewegungskomponente dadurch eliminiert werden, dass mit einem anderen Sensor eine andere Mischung von Bewegungen gemessen wird und beide Signale einem Vergleich unterzogen werden. Bewegungsgrößen können in mehreren voneinander unabhängigen Freiheitsgraden gemessen werden, auch wenn diese Freiheitsgrade aus kombinierten Bewegungen bestehen, also nicht voneinander getrennt sind. Bewegungsachsen bzw. Koordinaten müssen nicht notwendigerweise orthogonal zueinander stehen. Da jeder Sensor eine andere Mischung an Bewegungskomponenten misst, kann eine Entmischung der Messwerte in getrennte Koordinaten vorgenommen werden, indem die Meßsignale durch geeignete Mischung nach den Gesetzen der Vektorgeometrie in linear unabhängige, wahlweise orthogonale Meßsignale ungeformt werden.

Allgemein können beliebig viele und verschieden ausgerichtete Sensoren verwendet werden. Zusätzlich können zur Auswertung die Signale derjenigen Sensoren ausgewählt werden, die einen ausreichenden Kontrast melden. Dadurch verringert sich die Wahrscheinlichkeit ungenügender Bilddetails.

Für eine Regtung muss die beschriebene Umformung nicht notwendigerweise erfolgen. Allgemein können Raumkomponenten einer Bewegung auch in gemischter Form gemessen und geregelt werden. Durch geeignete Sensor-Ausrichtung kann die gewünschte Mischung festgelegt werden. Beim Hubschrauber eine optische Drehmessung zur Steuerung des Heckrotors verwendet werden. Dabei kann der Sichtstrahl nach schräg hinten-unten ausgerichtet sein. Dann misst und regelt man eine Kombination aus Hochachsendrehung und seitlicher Abdrift. Auf diese Weise stellt sich der Rumpf Wind-unabhängig in die geflogene Richtung.

Es können auch andere, zur Stabilisierung schon übliche Fluginstrumente ersetzt werden. Beispielsweise kann bei ferngelenkten Modellen der übliche Hochachsen-Gyro durch die DrehMessung ersetzt werden. Ferner kann statt eines Variometers eine optische Steigraten-Messung gemäß Anspruch 31, 38, 39, oder 40 verwendet werden.

Durch Kombination mit herkömmlichen Instrumenten zur Messung anderer Bewegungskomponenten, etwa der Flughöhe (Barometer) und der Nasen-Ausrichtung (Kompass), kann ein vollständiger Autopilot realisiert werden, der die gesamte Steuerung übernimmt.

Bei GPS-gesteuerten Anwendungen kann die Genauigkeit, Auflösung und Schnelligkeit der Messung durch Ergänzung mit den optischen Messwerten erheblich verbessert werden, besonders für den bodennahen Bereich.

Bei ungenügender Beleuchtung oder Kontrasten aus der Umgebung kann das Sensorsignal fehlerhaft sein. Solche Fehler äußern sich meist in Form betragsmäßig zu kleiner oder ganz fehlender Verschiebungs-Werte, und treten meist lokal, d.h. an vereinzelten Stellen auf. Um die Anzahl verwertbarer Bildstellen zu erhöhen und um Aussetzer zu verringern, können mehrere Sensoren mit verschiedenen Sichtrichtungen vorgesehen werden, wie schon anhand Figur 2, 3 oder 4 erläutert, und die Sensorsignale in Relation zueinander ausgewertet werden. Hierbei kann ein gemeinsames Messwert-Ergebnis gebildet werden, bei dem Sensoren mit kleinerem Messwert nicht oder geringer gewichtet werden. Der Begriff "kleiner" kann sich den Betrag des Verschiebungs-Messwertes aus einer oder mehreren Koordinaten beziehen, und / oder auch auf eine vom Verschiebungssensor ausgegebenen Messgröße der aktuellen Helligkeit und /oder Kontrast-Qulität im betreffenden Sensor. Der gemeinsame Messwert kann beispielsweise gebildet werden mittels Maximalwertbildung, mittels gewichteter Durchschnittsbildung oder mittels einer Umschaltung zum jeweils stärksten Sensor.

Mit einer Vielzahl Verschiebungssensoren kann ein Array gebildet werden, und die Sensoren können miteinander matritziert vernetzt werden, wobei man das hier beschriebene gewichtete Ergebn bilden kann. Weiterhin ist eine Kombination mit denanhand Figur 2, 3 und 4 beschriebenen Signal-Auswertungen möglich. Dies ermöglicht eine umfassende Auswertung der Bewegungen, welche bezüglich Geschwindigkeit einem auf Áuswertung eines Videosignals basierenden Verfahren weit überlegen ist.

Zur Vermeidung von Steuerfehlern, die eine Meßstörung zur Folge haben könnte, kann, unabhängig oder in Kombination zu obigen Methoden, beim Entfallen des Meßsignals die Regelung in einen anderen Modus umgeschaltet werden, bei dem kein optischen Meßsignal gebraucht wird. Die Umschaltung kann gesteuert werden vom Ausbleiben des Meßsignals und /oder von der Unterschreitung eines Mindest-Kontnaiwertes und / oder einer Mindest-Helligkeit. Die Umschaltung der Regelung kann erfolgen, indem die Wichtungs-Anteile für die bei der Mischung und Regelung beteiligten Soll- und Messwert Größen geeignet umgestellt werden, z.B. auf eine Konfiguration, wie sie aus dem Stand der Technik ohne Verschiebungssensor bekannt ist, bis das optische Signal wieder ausreichend vorhanden ist.

In einem einfachen Spezialfall hiervon kann während fehlendem Meßsignal die Rotomeigung horizontal gehalten werden.

Eine Vorrichtung der beschriebenen oder in den Ansprüchen bezeichneten Art kann allgemein auch zum Erkennen oder Messen von Relativ-Bewegungen zwischen der Vorrichtung und einem davon entfernten Objekte jeder Art ((unter Messung der Winkeländerung der optischen Einfallsrichtung eines virtuellen Bildes)) verwendet werden; hierbei kann einerseits der optisch abgetastete Körper bewegt sein und / oder andererseits, wie im beschriebenen Fall des Flugkörpers, ein die Sensorvorrichtung tragender Körper.

Hierzu muss lediglich ein optoelektronischer Verschiebungssensor (3), der mit einer Vielzahl photosensibler Teilflächen (Pixel) ausgestattet ist und Verschiebungen optischer Strukturen erkennt und ein Meßsignal für die Verschiebung ausgibt und eine Auswerteinheit hierfür auf seinem Chip integriert enthält, mit einer Abbildungsoptik (1) kombiniert und so angeordnet werden, dass optische Strukturen von unendlich entfernten Objekten auf der lichtempfindlichen Fläche des Sensors abgebildet werden mit einer Auflösung, die zur Erkennung einer Bildverschiebung ausreicht.

Als Beleuchtung kann das Umgebungslicht dienen. Die zur Verschiebungs-Abtastung erforderlichen Kontraste können 1 durch die Oberfläche des abgebildeten Objektes entstehen, oder auch durch die Konturen eines oder mehrerer Objekte gegenüber einem Hintergrund.

Im Unterschied zur Funktion einer optischen Maus kann das Objekt kleiner sein als der optische Erfassungsbereich der Vorrichtung, wobei dieses Bereich durch die Größe der lichtempfindlchen Sensorfläche, die Brennweite und den Abtast-Abstand bestimmt ist.

Das Objekt kann mit dem zur Abtastung erforderlichen Licht auch durchstrahlt werden.

Hier eine Aufstellung der dadurch möglicher Anwendungen, bei Bewegungen des abgetasteten Objektes: Eine Anwendung ist die Erkennung der Anwesenheit bewegter Objekte, etwa zur automatischen Öffnung von Toren bei einfahrenden Fahrzeugen oder eintretenden Personen, wobei im Unterschied zu bekannten optischen Sensoren wie Lichtschranken oder Lichttaster keine Einschränkung der Reichweite gegeben ist. Bei unstrukturiertern Hintergrund kann das erkannte Objekt wesentlich kleiner sein als der optische Erkennungsbereich, der durch die Größe der lichtempfindlichen Sensorfläche festgelegt wird.

Ene weitere Anendung ist die kontaktlose Messung von Geschwindigkeiten oder Drehungen bewegter Körper oder zur Messung des Abtandes zu bewegten Körpern. Beispielsweise kann der Sensor auf das auf einem Förderband befindliche Fördergut gerichtet sein. Bei gegebener Fördergeschwindigkeit kann aus der optisch gemessenen Verschiebungsgeschwindigkeit ein Messwert für die Höhe des Fördergutes ableiten, indem dessen Kehrwert gebildet wird.

Ferner können fortlaufende Materialien auf Fehlerfreiheit untersucht werden. Ein Fehler kann je nach Oberflächenbeschaffenheit und Beleuchtung als erkannte Struktur oder auch als ausbleibende Struktur registriert werden. Gegenüber herkömmlichen Bildsystemen ist erhebliche Konsten-Einspanrng möglich.

Ferner kann de Geschwindigket von Flüssigkeiten oder Gasen anhand der mitbewegten Schwebepartikel gemessen werden.

Eine weitere Anwendung ist es, eine visuelle Darstellung, beispielsweise in einem Schaufenster, von der Bewegung eines Betrachters abhängig zu machen. Hierzu wird der Betrachter mit der Vorrichtung optisch abgetastet. Indem das Gesicht eines Betrachters abgetastet wird, lässt sich das bei 3D-BilddarVietungen auftretende Problem der Nachführung (Headtracking) auf preiswerte Art lösen. Das Meßsignal des Verschiebungssensors kann als Maß der Verschiebung des Kopfes und / oder der aktuellen Augenposition herangezogen werden. Dieses Signal kann sowohl die Ansichtsperspektive eines dem Betrachter dargebotenen Bildes steuern, sodass sie der Kopfbewegung des Betrachters entspricht, als auch die Austrittsrichtung der für separate Augen vorgesehenen Austrittspupillen bei einer stereooptischen Bilddarstellung, um auch bei Kopfbewegungen ein Eintreffen in die richtig zugeordneten Augen zu ermöglichen.

Zusätzlich zu den Verschiebungssignalen des Sensors können auch weitere aus dem Sensor gewonnenen Meßsignale, etwa ein Helligkeits-Wert oder ein Kontrast-Qualtäts-Wert ausgewertet werden. Dies ist vorteilhaft zur Erkennung von Fördergut und Steuerung von Maschinen.

Anwendungen bei bewegter Sensorvorrichtung: Für Roboter und Fahrzeuge, auch selbst lenkenden, und zwar sowohl zur automatischen Lenkung über einen Regelkreis, als auch zur Abstandserkennung und Kollisionsvermeidung. Auch in diesem Fall kann die Bewegung wahlweise quantitativ gemessen werden oder nur die Anwesenheit eines Objektes, etwa eines Hindernisses erkannt werden. Bei seitlicher Sichtrichtung kann der Seitenabstand, etwa zu einer Wand, gemessen und geregelt werden. Als Stellglied kann hierbei die Lenkung gesteuert werden und ermöglicht das Fahren entlang eines Hindernisses.

## Patentansprüche

1. Verfahren zur Stabilisierung eines als Flugkörper ausgebildeten, maschinell steuerbaren oder mit Eigenantrieb versehenen Vehikels mittels eines Regelkreises (7) mit Istwert-Sollwert-Vergleich und Steuerung in mindestens einer NeigungsAchse, bei dem
- zur Messung der Bewegung und / oder Position in mindestens einem der sechs räumlichen Freiheitsgrade eine optoelektronische Sensorik verwendet wird, welche mithilfe einer vom Vehikel (1) getragenen Abbildungsoptik (2) ein von der aktuellen Position aus sichtbares Ausschnittsbild der Umgebung (4) erfasst,
- die optische Sichtrichtung der Abbildung mit einer wesentlichen vertikalen Komponente nach unten ausgerichtet ist,
- ein optisches Meßsignal der Verschiebung abgebildeter Strukturen als Messwert für mindestens eine der horizontalen Bewegungsgrößen Position / Weg, Geschwindigkeit und Beschleunigung herangezogen wird, und
- zur Steuerung der Neigung des Flugkörpers in Abhängigkeit von dem Messwert ein Stellwert in dem Regelkreis (7) gebildet wird, wobei der Messwert um die durch Drehbewegungen wie Rollen, Nicken und Gieren des Vehikels entstehenden Einflüsse zumindest teilweise bereinigt wird, indem ein Drehsignal, das zu einer Drehgröße, deren Winkel oder deren Winkelgeschwindigkeit proportional ist, mit dem optisch gewonnenen Messwert kompensierend gemischt wird.

2. Verfahren nach Anspruch 1, bei dem zur Stabilisierung der horizontalen Bewegungsgröße ein Regelkreis geschlossen wird, indem ein Neigungs-Stellwert des Regelkreises proportional und entgegengesetzt zu einer Abweichung des optischen Messwerts von einem Sollwert definiert Wird.

3. Verfahren nach Anspruch 2, **dadurch gekennzeichnet, dass** es gleichzeitig zur Regelung des Neigungswinkels der Fluglage ausgebildet ist und hierzu eine reale oder rechnerisch simulierte Messgröße für die aktuelle Neigung der Fluglage herangezogen wird.

4. Verfahren nach einem der vorausgehenden Ansprüche, **dadurch gekennzeichnet, dass** ein gegebener Sollwert einer horizontalen Transtationsgroße wie Geschwindigkeit und/oder Position mit dem optischen Messwert verglichen wird und eine resultierende Ortsabweichung (30a) als Steilwert für eine Rückflug-Geschwindigkeit herangezogen wird, und dass diese Geschwindigkeit ihrerseits wiederum geregelt wird (30b), indem proportional und entgegengesetzt zur Abweichung der Geschwindigkeit ein Neigungs-Stellwert (30b) definiert wird, und dass die Neigung ihrerseits mit einem Neigungssensor (25) gemessen und mittels Sollwertvergleich (30c) geregelt wird.

5. Verfahren nach einem der vorausgehenden Ansprüche, **dadurch gekennzeichnet, dass** Messgrößen für Neigung und für Bewegung und/oder Position des Flugkörpers (1) gemischt und gemeinsam geregelt werden.

6. Verfahren nach einem der vorausgehenden Ansprüche, **dadurch gekennzeichnet, dass** eine zur Geschwindigkeit proportionale optisch gewonnene Messgröße (24) in mindestens einem Teil ihres Frequenzbereiches zeitlich differenziert wird und dass zur Darstellung eines Messwertes für die Neigung dieses Signal gemischt wird mit einem zeitlich integrierten Signal eines zur Winkelgeschwindigkeit der Neigung proportionalen Drehsignals, dessen niederfrequente Spektralanteile geringer gewichtet werden.

7. Verfahren nach einem der vorausgehenden Ansprüche, wobei das Bild der Umgebung in Form von Pixeldaten erfasst wird und das optische Verschiebungssignal gebildet wird durch Vergleich der Pixeldaten mit denen aus einem früheren Zyklus derselben Sequenz.

8. Verfahren nach einem der vorausgehenden Ansprüche, **dadurch gekennzeichnet, dass** es zur horizontaten Stabilisierung eines Schwebeflugs verwendet wird, wobei ein Sollwert einer Horizontalgeschwindigkeit Null werden kann.

9. Verfahren nach Anspruch 8, **dadurch gekennzeichnet, dass** zur horizontalen Stabilisierung des Schwebeflugs eines Hubschraubers (1) eine Ansteuerung der zyklischen Rotorblattverstellung erfolgt.

10. Regel-System zur Stabilisierung eines als Flugkörper ausgebildeten, maschinell steuerbaren oder mit Eigenantrieb versehenen Vehikels mittels eines Regelkreises (7) mit Istwert-Sollwert- Vergleich und Steuerung in mindestens einer NeigungsAchse, bei dem zur Messung der Bewegung und / oder Position in mindestens einem der sechs räumlichen Freiheitsgrade eine optoelektronische Sensorik vorgesehen ist, welche geeignet ausgebildet ist um mithilfe einer vom Vehikel (1) getragenen Abbildungsoptik (2) ein von der aktuellen Position aus sichtbares Ausschnittsbild der Umgebung (4) zu erfassen, wobei die optische Sichtrichtung der Abbildung mit einer wesentlichen vertikalen Komponente nach unten ausgerichtet ist, wobei der Regelkreis (7) eingerichtet ist, um ein optisches Meßsignal der Verschiebung abgebildeter Strukturen als Messwert für mindestens eine der horizontalen Bewegungsgrößen Position / Weg, Geschwindigkeit und Beschleunigung heranzuziehen und zur Steuerung der Neigung des Flugkörpers in Abhängigkeit von dem Messwert einen Steilwert zu bilden, wobei der Messwert um die durch Drehbewegungen wie Rollen, Nicken und Gieren des Vehikels entstehenden Einflüsse zumindest teilweise bereinigt wird, indem ein Drehsignal, das zu einer Drehgröße, deren Winkel oder deren Winkelgeschwindigkeit proportional ist, mit dem optisch gewonnenen Messwert kompensierend gemischt wird.

11. System nach Anspruch 10 zur Stabilisierung einer horizontalen Trenslationsgröße, **dadurch gekennzeichnet, dass** der Regelkreis (7) geschlossen wird, indem der Neigungs-Stellwert proportional und entgegengesetzt zu einer Abweichung des optischen Messwerts von einem Sollwert definiert wird und dass das System gleichzeitig zur Regelung eines Neigungswinkels der Fluglage ausgebildet ist und hierzu eine reale oder rechnerisch simulierte Messgröße für die aktuelle Neigung der Fluglage herangezogen wird.

12. System nach einem der Ansprüche 10 oder 11, **gekennzeichnet durch** einen optoelektronischen Verschiebungssensor (3) welcher die Vielzahl photosensibler Teilflächen und eine digitale Auswerteelektronik auf einem gemeinsamen Chip aufweist, wobei die Auswerteelektronik die Signale von den photosensiblen Teilflächen fortlaufend wiederholt ausliest, diese Signale zur Erkennung von Bildverschiebungen abgebildeter Strukturen auswertet und zur Ausgabe eines Meßsignals für eine Bildverschiebung ausgebildet ist.

13. Flugkörper, insbesondere Drehflügler (1), umfassend ein System nach einem der Ansprüche 10 bis 12.

## Claims

1. Method for the stabilisation of a vehicle - formed as a flying object which is machine-controllable or provided with a separate means of propulsion - by means of a control loop (7), with actual value/setpoint value comparison and controlling, in at least one inclination axis, in which
- for measuring the movement and/or position in at least one of the six spatial degrees of freedom an opto-electronic sensor system is used, which system, by means of an optical imaging system (2) carried by the vehicle (1), captures a an image of a section of the surrounding area (4) visible from the current position,
- the optical viewing direction of the image is orientated downwards with an essentially vertical component,
- an optical measurement signal of the displacement of displayed structures is used as a measured value for at least one of the horizontal kinematic quantities of position/path, speed and acceleration, and
- for controlling the inclination of the flying object in dependence upon the measured value, a control value is formed in the control loop (7), wherein the measured value is at least partially corrected by the influences which arise as a result of rotational movements, such as rolling, pitching and yawing of the vehicle, by a rotational signal
- which is proportional to a rotational variable, its angle or its angular speed - being mixed with the optically acquired measured value with compensating effect.

2. Method according to Claim 1, in which for the stabilisation of the horizontal kinematic quantity, a control loop is closed by a control loop's control value for an inclination being defined proportionally to and opposed to a deviation of the optical measured value from a setpoint value.

3. Method according to Claim 2, **characterised in that** it is designed for controlling the inclination angle of the flight attitude at the same time and, to this end, a real measured variable, or a measured variable simulated by a computer, is used for the current inclination of the flight attitude.

4. Method according to one of the preceding claims, **characterised in that** a given setpoint value of a horizontal translational quantity, such as speed and/or position, is compared with the optical measured value and a resulting position deviation (30a) is used as a control value for a return flight correction speed, and **in that** this speed in its turn is controlled (30b) again by an inclination control value (30b) being defined proportionally to and opposed to the deviation of the speed, and **in that** the inclination in its turn is measured by an inclination sensor (25) and controlled by means of setpoint value comparison (30c).

5. Method according to one of the preceding claims, **characterised in that** measured variables for inclination and for movement and/or position of the flying object (1) are mixed and controlled together.

6. Method according to one of the preceding claims, **characterised in that** an optically acquired measured variable (24), which is proportional to the speed, is temporally differentiated in at least one part of its frequency range and **in that** for producing a measured value for the inclination this signal is mixed with a temporally integrated signal of a rotational signal which (rotational signal) is proportional to the angular speed of the inclination, and the low-frequency spectral components of which are weighted less.

7. Method according to one of the preceding claims, wherein the image of the surrounding area is captured in the form of pixel data and the optical displacement signal is formed by comparison of the pixel data with that from an earlier cycle of the same sequence.

8. Method according to one of the preceding claims, **characterised in that** it is used for the horizontal stabilisation of a hovering flight, wherein a setpoint value of a horizontal speed can be zero.

9. Method according to Claim 8, **characterised in that** for the horizontal stabilisation of the hovering flight of a helicopter (1) actuation of the cyclic pitch control is carried out.

10. Control system for the stabilisation of a vehicle - formed as a flying object which is machine-controllable or provided with a separate means of propulsion - by means of a control loop (7), with actual value/setpoint value comparison and controlling, in at least one inclination axis, in which for measuring the movement and/or position in at least one of the six spatial degrees of freedom provision is made for an opto-electronic sensor system which is suitably designed to capture - by means of an optical imaging system (2) carried by the vehicle (1) - an image of a section of the surrounding area (4) visible from the current position, wherein the optical viewing direction of the image is orientated downwards with an essentially vertical component, wherein the control loop (7) is designed to use an optical measurement signal of the displacement of displayed structures as a measured value for at least one of the horizontal kinematic quantities of position/path, speed and acceleration, and for controlling the inclination of the flying object in dependence upon the measured value to form a control value, wherein the measured value is at least partially corrected by the influences which arise as a result of rotational movements,
such as rolling, pitching and yawing of the vehicle, by a rotational signal - which is proportional to a rotational variable, its angle or its angular speed - being mixed with the optically acquired measured value with compensating effect.

11. System according to Claim 10 for the stabilisation of a horizontal translational quantity, **characterised in that** the control loop (7) is closed by the inclination control value being defined proportionally to and opposed to a deviation of the optical measured value from a setpoint value, and **in that** the system is designed for controlling an inclination angle of the flight attitude at the same time and, to this end, a real measured variable, or an arithmetically simulated measured value, is used for the current inclination of the flight attitude.

12. System according to one of Claims 10 and 11, **characterised by** an opto-electronic displacement sensor (3) which features the multiplicity of photo-sensitive portions/pixels and digital evaluation electronics on a common chip, wherein the evaluation electronics continuously repeatedly reads the signals from the photosensitive portions/pixels, evaluates these signals for identifying image displacements of displayed structures and is designed for sending out a measurement signal for an image displacement.

13. Flying object, especially a rotary-wing aircraft (1), comprising a system according to one of Claims 10 to 12.

## Revendications

1. Procédé pour la stabilisation d'un véhicule réalisé sous la forme d'un aéronef, pouvant être commandé mécaniquement ou étant équipé de son propre système d'entraînement, au moyen d'un circuit de réglage (7) avec une comparaison valeur réelle/valeur théorique et une commande dans au moins un axe d'inclinaison, selon lequel
- pour mesurer le déplacement et/ou la position dans au moins un des six degrés de liberté dans l'espace, on utilise un système de détection optoélectronique qui, au moyen d'une optique de reproduction (2), portée par le véhicule (1), enregistre une image d'une zone de l'environnement (4), visible à partir de la position actuelle,
- la direction de visée optique de l'image est dirigée vers le bas avec une composante sensiblement verticale,
- un signal de mesure optique du mouvement de translation des structures représentées sur l'image est pris en considération comme valeur de mesure pour au moins une des grandeurs de translation horizontales, à savoir position/trajet, vitesse et accélération, et
- pour commander l'inclinaison de l'aéronef en fonction de la valeur de mesure, une valeur de réglage est formée dans le circuit de réglage (7), ladite valeur de mesure étant dépouillée au moins partiellement des influences dues à des mouvements de rotation, tels que le roulis, le tangage et le lacet du véhicule, du fait qu'un signal de rotation, qui est proportionnel à une grandeur de rotation, l'angle de celle-ci ou la vitesse angulaire de celle-ci, est combiné de manière compensatoire à la valeur de mesure obtenue par voie optique.

2. Procédé selon la revendication 1, selon lequel, pour stabiliser la grandeur de translation horizontale, on ferme un circuit de réglage, du fait qu'une valeur de réglage de l'inclinaison dans le circuit de réglage est définie de manière proportionnelle et opposée à une divergence de la valeur de mesure optique par rapport à une valeur théorique.

3. Procédé selon la revendication 2, **caractérisé en ce qu'**il est conçu en même temps pour le réglage de l'angle d'inclinaison de l'assiette et, à cet effet, est prise en compte une grandeur de mesure réelle ou simulée par calcul pour l'inclinaison actuelle de l'assiette.

4. Procédé selon l'une quelconque des revendications précédentes, **caractérisé en ce qu'**une valeur théorique donnée d'une grandeur de translation horizontale, telle que la vitesse et/ou la position, est comparée à la valeur de mesure optique, et une divergence locale (30a) en résultant est prise en compte comme valeur de réglage pour une vitesse en translation arrière, et **en ce que** cette vitesse, pour sa part, est à nouveau réglée (30b) du fait qu'une valeur de réglage de l'inclinaison (30b) est définie de manière proportionnelle et opposée à la divergence de la vitesse, et **en ce que** l'inclinaison, pour sa part, est mesurée avec un capteur d'inclinaison (25) et est réglée au moyen d'une comparaison (30c) avec les valeurs théoriques.

5. Procédé selon l'une quelconque des revendications précédentes, **caractérisé en ce que** des grandeurs de mesure pour l'inclinaison et pour le déplacement et/ou la position de l'aéronef (1) sont combinées et sont réglées conjointement.

6. Procédé selon l'une quelconque des revendications précédentes, **caractérisé en ce qu'**une grandeur de mesure (24), obtenue par voie optique et proportionnelle à la vitesse, est différenciée en fonction du temps dans au moins une partie de sa plage de fréquences, et **en ce que** pour représenter une valeur de mesure pour l'inclinaison, ce signal est combiné à un signal intégré en fonction du temps d'un signal de rotation, qui est proportionnel à la vitesse angulaire de l'inclinaison et dont les composantes spectrales de faible fréquence sont pondérées plus faiblement.

7. Procédé selon l'une quelconque des revendications précédentes, selon lequel l'image de l'environnement est enregistrée sous la forme de données pixel et le signal de translation optique est formé par la comparaison des données pixel avec celles issues d'un cycle antérieur de la même séquence.

8. Procédé selon l'une quelconque des revendications précédentes, **caractérisé en ce qu'**il est utilisé pour la stabilisation horizontale d'un vol stationnaire, une valeur théorique d'une vitesse horizontale pouvant devenir égale à zéro.

9. Procédé selon la revendication 8, **caractérisé en ce que** pour la stabilisation horizontale du vol stationnaire d'un hélicoptère (1), on effectue une commande du réglage cyclique des pales du rotor.

10. Système de réglage pour la stabilisation d'un véhicule réalisé sous la forme d'un aéronef, pouvant être commandé mécaniquement ou étant équipé de son propre système d'entraînement, au moyen d'un circuit de réglage (7) avec une comparaison valeur réelle/valeur théorique et une commande dans au moins un axe d'inclinaison, dans lequel pour mesurer le déplacement et/ou la position dans au moins un des six degrés de liberté dans l'espace, il est prévu un système de détection optoélectronique qui est réalisé pour enregistrer, au moyen d'une optique de reproduction (2) portée par le véhicule (1), une image d'une zone de l'environnement (4), visible à partir de la position actuelle, la direction de visée optique de l'image étant dirigée vers le bas avec une composante sensiblement verticale, le circuit de réglage (7) étant configuré pour prendre en compte un signal de mesure optique du mouvement de translation des structures représentées sur l'image en tant que valeur de mesure pour au moins une des grandeurs de translation horizontales position/trajet, vitesse et accélération, et pour former une valeur de réglage pour commander l'inclinaison de l'aéronef en fonction de la valeur de mesure, ladite valeur de mesure étant dépouillée au moins partiellement des influences dues à des mouvements de rotation, tels que le roulis, le tangage et le lacet du véhicule, du fait qu'un signal de rotation, qui est proportionnel à une grandeur de rotation, l'angle de celle-ci ou la vitesse angulaire de celle-ci, est combiné de manière compensatoire à la valeur de mesure obtenue par voie optique.

11. Système selon la revendication 10 pour la stabilisation d'une grandeur de translation horizontale, **caractérisé en ce que** l'on ferme le circuit de réglage (7) du fait que la valeur de réglage de l'inclinaison est définie de manière proportionnelle et opposée à une divergence de la valeur de mesure optique par rapport à une valeur théorique, et **en ce que** le système est réalisé en même temps pour régler un angle d'inclinaison de l'assiette et, à cet effet, est prise en compte une grandeur de mesure réelle ou simulée par calcul pour l'inclinaison actuelle de l'assiette.

12. Système selon la revendication 10 ou 11, **caractérisé par** un capteur de déplacement (3) optoélectronique qui comporte la pluralité de surfaces partielles photosensibles et une électronique d'analyse numérique sur une puce commune, l'électronique d'analyse lisant en continu de manière répétée les signaux des surfaces partielles photosensibles, analysant ces signaux pour déceler des mouvements de translation des structures représentées sur l'image et étant réalisé pour émettre un signal de mesure pour un déplacement d'image.

13. Aéronef, en particulier giravion (1), comprenant un système selon l'une quelconque des revendications 10 à 12.
